# EUROPÄISCHE PATENTSCHRIFT

(11) **EP 1 033 318 B1**
(45) Veröffentlichungstag und Bekanntmachung des Hinweises auf die Patenterteilung: **18.09.2002**
(21) Anmeldenummer: 99103183.2
(22) Anmeldetag: 18.02.1999
(51) Int. Cl.: B65D 35/10, B65D 23/02, B29D 23/20

(54) **Tubenschulter und Verfahren zu ihrer Herstellung**
Tube shoulder and process for its manufacture
Epaulement de tube et procédé pour sa fabrication

(43) Veröffentlichungstag der Anmeldung: 06.09.2000
(73) Patentinhaber: FOBOHA GmbH, D-77716 Haslach (DE)
(72) Erfinder: Armbruster, Rainer, 77709 Wolfach (DE)
(74) Vertreter: Frei, Alexandra Sarah

(56) Entgegenhaltungen:
- GB-A- 1 118 632
- US-A- 3 565 293
- US-A- 4 185 757
- US-A- 4 275 864

## Beschreibung

Die vorliegende Erfindung betrifft eine mehrschichtige Tubenschulter für eine Tube und ein Verfahren zur Herstellung solcher Tubenschultem gemäss den Oberbegriffen der unabhängigen Patentansprüche.

Aus dem Stand der Technik sind verschiedene Tubenschultern für Tuben bekannt. Diese werden heute praktisch ausschliesslich aus thermoplastischem Kunststoff durch Spritzgiessen hergestellt und in einem weiteren Arbeitsschritt mit dem röhrenförmigen Tubenkörper verschweisst.

Gewisse Kunststoffe, wie beispielsweise Polyethylen (PE), weisen eine beträchtliche Durchlässigkeit für Sauerstoff, Kohlensäure und Geruchs- und Aromastoffe auf. Bei Tubenachultem aus diesen Materialien gelangen so durch Diffusion ungewollt Stoffe aus der Tube in die Umwelt oder aus der Umwelt in die Tube; was zu einer Beeinträchtigung des Füllgutes führt. Um diese schädliche Permeabilität zu verhindern, weisen Tubenschultern in der Regel einen zweischichtigen Aufbau, bestehend aus einer äusseren, formgebenden Schicht und einer Inneren Sperrschicht, auf.

Als Material für die formgebende Schicht wird in der Regel Polyethylen (PE) und als Material für die Sperrschicht Polyethylenterephthalat (PET) verwendet. Dass diese Materialien nicht aneinander haften, stellt eines-der Hauptprobleme bei der rationellen und wirtschaftlichen Herstellung von Tubenschultern dar.

Die Verwendung von mehrschichtigen Tubenschultem aus PE und PET hat sich heute durchgesetzt. Aus dem Stand der Technik sind daher verschiedene Versuche bekannt mehrschichtige Tubenschultern rationell und wirtschaftlich herzustellen, bspw. wie In US-4,185,757 offenbart. Keine der bekannten Lösungen befriedigt vollumfänglich. Da es sich bei Tubenschultem um einen Massenartikel handelt, wird der Preis primär durch zwei Faktoren bestimmt erstens den Materialverbrauch und zweitens die Zykluszeit für die Herstellung. Die aus dem Stand der Technik bekannten Tubenschultem weisen einerseits einen zu hohen Materialverbrauch auf, was sich auch auf den Ressourcenverbrauch und damit auf die Kosten und die Umweltverträglichkeit auswirkt. Andererseits sind sie nicht rationell herzustellen, da sie zu hohe Zykluszeiten erfordern. Gewisse Tubenschultam erfordern sogar mehrere Spritzgusswerkzeuge und mehrere Arbeitsgänge, was in einer schlechten Ausnutzung der investierten Maschinen und Werkzeuge endet.

Die Problematik der nicht aneinander haftenden Materialien hat im Stand der Technik zu ineffizienten oder gar unpraktikablen Lösungen geführt. Diese beruhen, wie bspw. US-4,185,757, auf filigranen Hinterschneidungen und Verkeilungen, die eine formschlüssige Verbindung zwischen der inneren Sperrschicht und der äusseren, formgebenden Schicht einer Tubenschulter bewirken sollen. Diese Hinterschneidungen und Verkeilungen bestehen beispielsweise aus miteinander korrespondierenden Rillen und Rippen die in der Regel quer zur Symmetrieachse der Tubenschulter angebracht sind und so ausgebildet sind, dass sie zwangsentformt Werden müssen.

Eine weitere mehrschichtige Tubenschulter wird in der europäischen Patentanmeldung EP 0 130 239 beschrieben. Diese Anordnung beruht darauf, dass eine innenliegende Sperrschicht mittels Reibung an einer aussenliegenden formgebenden Schicht haftet. Diese Anordnung Ist aus verschiedenen Gründen unbefriedigend. Erstens müssen die beiden Schichten in einem separaten Arbeitsschritt zusammengesetzt werden, zweitens ist kein sicherer Halt zwischen den beiden Teilen möglich und drittens bedürfen die Teila einer erhöhten Fertigungsgenauigkeit, die u.a. das Schwundverhalten der Materialien berücksichtigt.

Aus US-3,565,293 ist eine faltbare Tube bekannt. Diese beinhaltet eine mehrschichtige Tubenschulter mit einer Sperrschicht und einer Aussenschicht. Die Sperrschicht weist vorstehende Wülste und Hinterschneidungen auf, kann aus Kunststoff oder Metall bestehen und wird getrennt hergestellt.

Die Teile der oben beschriebenen Tubenschultem können in der Regel erst weiterverarbeitet werden, wenn sie komplett ausgekühlt sind. Ausserdem ist es notwendig, die einzelnen Teile, die heute meist getrennt hergestellt werden, in einem separaten Arbeitsgang (auch manuell) zu verbinden. Die aus dem Stand der Technik bekannten Anordnungen führen daher dazu, dass der Herstellungsprozess der entsprechenden Tubenschultern geradewegs ausgebremst wird.

Es ist Aufgabe der vorliegenden Erfindung, die im Zusammenhang mit dem obigen Stand der Technik diskutlerten Nachteile zu vermeiden. Einerseits sind mittels der hier offenbarten Erfindung drastische Matedalreduktionen möglich und andererseits wird die Herstellungszeit massiv verkürzt und optimiert, was sich In einer besseren Ausnutzung der investierten Ressourcen niederschlägt. Die Aufgabe wird durch die in den Patentansprüchen definierte Erfindung gelöst.

Im Unterschied zum Stand der Technik, der In der Regel auf Zwangsentformung von abgekühlten Teilen beruht, wird bei der hier offenbarten Erfindung nicht gewartet, bis das Material der ersten Komponente abgekühlt ist, sondern ein Weiterverarbeiten erfolgt im noch nicht ausgehärteten Zustand. Dadurch wird einerseits ein beträchtlicher Zeitgewinn erreicht und andererseits wird der Materialverbrauch stark reduziert, da die Schichten der hier offenbarten Tubenschulter, im Unterschied zu den herkömmlichen Tubenschultern, signifikant dünner hergestellt werden.

Die Möglichkeit die erste Komponente weiter zu verarbeiten, bevor das Material komplett ausgehärtet ist, wird durch das erfindungsgemässe, herstellungsoptimierte Design der Tubenschulter ermöglicht, das sich, im Unterschied zu den aus dem Stand der Technik bekannten Designs, nicht einengend auf die Herstellungszyklen auswirkt. Hinterschneidungen oder filigrane Verkeilungen, die schlecht entformbar sind oder sogar zwangsweise entformt werden müssen, werden gezielt vermieden. Angestrebt werden grosszügig dimensionierte Kontaktflächen zwischen den einzelnen Teilen der Tubenschulter, die so angeordnet sind, dass keine zwangsweise Entformung notwendig ist und ein mög-lichst einfacher Aufbau der Spritzgussform resultiert. Ausserdem ist das Design so optimiert, dass der Materialschwund keine negative Auswirkung auf die Herstellungsgensauigkeit hat, resp. aktiv kompensiert wird.

Die Erfindung ermöglicht es erstmals, dass eine erste Materialkomponente in einer ersten Kavität eines Spritzgusswerkzeuges gespritzt wird und diese erste Materialkomponente, bevor das Material ausgehärtet ist, aus der ersten Kavität entnommen wird, um es nach einer Freistellung, in einer zweiten Kavität des ersten Spritzgusswerkzeuges oder eines zweiten Spritzgusswerkzeuges mit einer zweiten Komponente eines anderen Materials so zu umspritzen, dass eine feste mechanische Verbindung zwischen der ersten und der zweiten Phase resultiert. Dabei wird die erste Materialkomponente in der ersten Kavität auf einen Träger gespritzt. Dieser Träger ist so ausgestaltet, dass er teilplastisches Material zu transportieren vermag. Nach dem Aufspritzten der ersten Phase wird der Träger mit dem teilplastischen Material der ersten Komponente aus der ersten Kavität entnommen und in die zweite Kavität eingeführt, so dass das Material der zweiten Komponente eingespritzt werden kann und dieses formschlüssig mit der ersten Komponente verbunden wird. Bevor das Material der zweiten Komponente eingespritzt wird, erfolgt eine Freistellung des Materials der ersten Komponente. Hierbei handelt es sich um einen mechanischen Vorgang, bei dem mittels einem Schieber oder einem funktional äquivalenten Element ein gewisser Bereich oder Fläche der ersten Materialkomponente freigegeben wird, so dass das Material der zweiten Komponente in diesem Bereich das Material der ersten Komponente nach dem Spritzvorgang hinterschneidend umgreift. Durch den so gebildeten mechanischen Anschlag ergibt sich eine formschlüssige Verbindung zwischen der ersten Materialkomponente und der zweiten Materialkomponente. Diese Freistellung erfolgt vorzugsweise möglichst grossflächig.

Die Erfindung weist gegenüber dem Stand der Technik zwei gravierende Vorteile auf. Einerseits wird der Materialverbrauch einer zweischichtigen Tubenschulter massiv reduziert und andererseits die Zykluszeit bei der Herstellung drastisch verkürzt.

Die hier offenbarte Erfindung eignet sich auch dazu, dass in einem weiteren Schritt ein Tubenkörper integral mit der Tubenschulter verbunden wird. Dieser Tubenkörper kann dabei als Fremdteil von aussen dem Verarbeitungsprozess zugeführt werden. Dieser zusätzliche Schritt erfolgt vorteilhafterweise in einer weiteren Kavität oder wird mit einem der Schritte kombiniert, bei denen die erste oder die zweite Materialkomponente hergestellt werden.

Anhand der nachfolgend aufgeführten Figuren wird die Erfindung an einer bevorzugten Ausführungsform im Detail diskutiert.
- Fig. 1: zeigt schematisch eine bevorzugte Ausführungsform einer Tubenschulter in einer perspektivischen Schnittansicht.
- Fig. 2: zeigt schematisch den Ablauf des Herstellungsprozesses einer Tubenschulter.

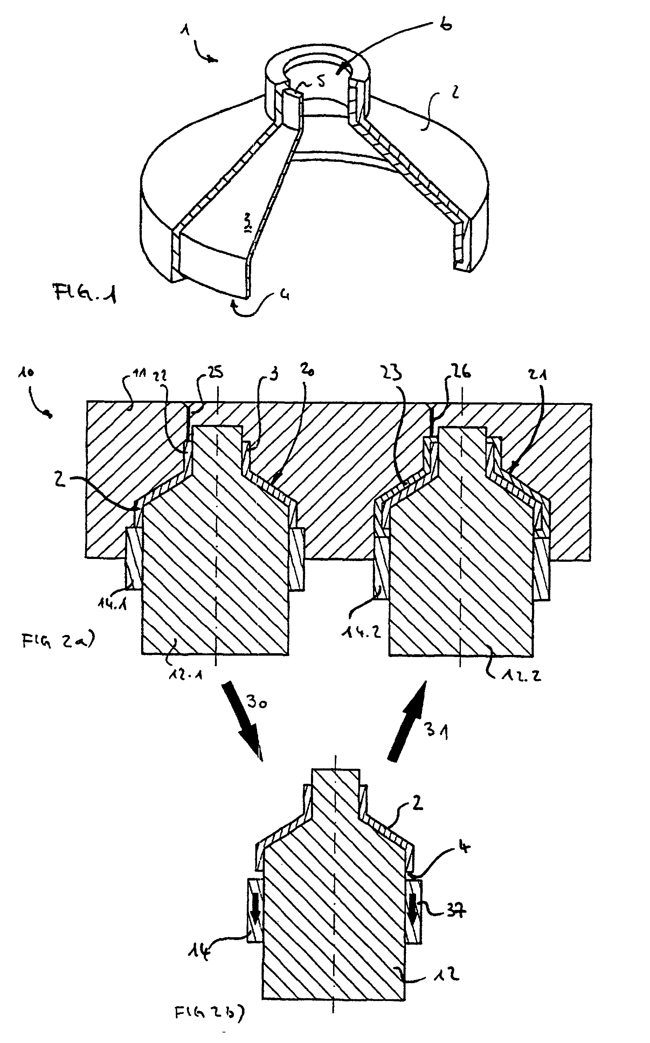

Figur 1 zeigt eine bevorzugte Ausführungsform einer Tubenschulter 1 in einer perspektivischen Schnittansicht. Die Tubenschulter 1 besteht aus einer Aussenschicht 2 und einer innen liegenden Sperrschicht 3. Bevorzugterweise besteht die Aussenschicht 2 aus Polyethylen (PE) und die Sperrschicht 3 aus Polyethylenterephthalat (PET). Die Aussenschicht 2 dient primär der Formgebung der Tubenschulter 1, wobei die Sperrschicht 3 der Dichtheit der Tubenschulter 1 dient. Die beiden Materialien der Aussenschicht 2 und der Sperrschicht 3 sind typischerweise nicht miteinander verschmelzbar. Um trotzdem eine mechanische Verbindung zu erreichen, umgreift die Aussenschicht 2 die Sperrschicht 3 hier an einer unteren Fläche 4 und einer oberen Fläche 5, so dass eine grossflächige formschlüssige Verbindung zwischen der Aussenschicht 2 und der Sperrschicht 3 entsteht. Die hier gezeigte Ausführungsform der Tubenschulter 1 ermöglicht erst aufgrund ihrer erfindungsgemässen Ausführungsform, die gezielt kleine Hinterschneidungen usw. vermeidet, die Anwendung des in Figur 2 beschriebenen Verfahrens.

Aufgrund der erfindungsgemässen Ausführungsform der Tubenschulter 1, bei der alle mechanischen Verbindungen zwischen der Aussenschicht 2 und der Sperrschicht 3 möglichst grossflächig ausgelegt sind, ist es erst möglich, die Sperrschicht 3 in einem Werkzeug 10 freizustellen, solange das Material der Sperrschicht 3 noch teilplastisch ist. Bei filigranen oder schlecht entformbaren Hinterschneidungen (bspw. Hinterschneidungen die zwangsentformt werden müssen) ist dies nicht möglich. Die hier offenbarte Erfindung stützt sich daher auf ein Design von Tubenschultern, die ein optimales grossflächiges und zwangfreies Entformen ohne Hinterschneidungen ermöglichen. Die einzelnen Schritte der Herstellung werden schematisch in den Figuren 2a) und 2b) dargestellt.

Figur 2a) zeigt schematisch eine Schnittdarstellung durch eine Spritzgussform 10 zur Herstellung der Tubenschulter 1 gemäss Figur 1. Die Spritzgussform 10 besteht hier aus einem Grundkörper 11, der zwei Öffnungen 20 und 21 aufweist. Zwei hier identische rotationssymmetrische Kerne 12.1 und 12.2 und zwei identische ringförmige Freistellemente 14.1 und 14.2 greifen von unten dichtend in die Öffnungen 20 und 21 ein, so dass eine erste Kavitäten 22 und eine zweite Kavität 23 gebildet werden. Die erste Kavität 22 entspricht dem Negativ einer Sperrschicht 3 gemäss Figur 1. Die zweite Kavität 23 entspricht dem Negativ einer Sperrschicht 3 und einer Aussenschicht 3.

Über einen ersten Angusskanal 25 wird geschmolzener Kunststoff einer ersten Materialkomponente, vorzugsweise PET, in die erste Kavität 22 gespritzt, so dass eine Sperrschicht 3 gemäss Figur 1 gebildet wird. Bevor der Kunststoff dieser Sperrschicht 3 ausgehärtet ist, wird der Kern 12, das Freistellement 14 und die teilplastische Sperrschicht 3 aus der Öffnung 20 gezogen. Dieser Vorgang ist durch ein Pfeil 30 verdeutlicht.

Wie in Figur 2b) dargestellt, wird anschliessend das Freistellement 14 so verschoben (Pfeil 37), dass eine Freistellung einer unteren Fläche 4 der Sperrschicht 3 erfolgt.

Der Kern 12, das Freistellement 14 und die Sperrschicht 3 werden anschliessend in die zweite Öffnung 21 der Spritzgussform 10 dichtend eingeschoben (Figur 2a). Dies ist schematisch durch ein Pfeil 31 dargestellt. Durch einen zweiten Angusskanal 26 wird eine zweite Materialkomponente um die durch die erste Materialkomponente gebildete, freigestellte Sperrschicht 3 gespritzt, so dass eine feste mechanische Verbindung entsteht. Mindestens eine Fläche, vorzugsweise eine ringförmige Fläche 4, 5 (vgl. Figur 1) dient als mechanischer Anschlag. Die zweite Materialkomponente bildet eine Aussenschicht 2 gemäss Figur 1.

Der ganze Ablauf wird hier in sehr schematischer Weise dargestellt und wird in der Praxis vorteilhafterweise in einem Wendewerkzeug mit typischerweise zwei Kavitäten 20 und zwei Kernen 14.1 und 14.2 eingebaut. Beide Kerne 14.1 und 14.2 sind dabei gleichzeitig im Einsatz. Durch das erfindungsgemässe Design der Tubenschulter und der dadurch ermöglichten, zwangsfreien Freistellung der erstem Materialkomponente im noch teilplastischen Zustand, ist, im Vergleich zu herkömmlichen Tubenschultern, eine massive Reduktion der Zykluszeiten und des Materialverbrauchs möglich. Insbesondere die Sperrschicht kann sehr dünn ausgeführt werden, da der Kern 14 als formgebender Träger wirkt.

Am Ende eines Herstellungszyklus dient das Freistellement 14 zusätzlich als Ausstosshilfe für die fertige Tubenschulter 1.

Um eine bessere Abdichtung der Kavitäten 22 und 23 zu erreichen, werden die miteinander in Wirkkombination tretenden Flächen der Freistellemente 14.1, 14.2 und der Kavitäten 22, 23 vorteilhafterweise konisch ausgebildet.

Der hier beschriebene, sehr schnell ablaufende Herstellungsprozess wird zusätzlich, und je nach Dimensionen der herzustellenden Tubenschulter 1, durch die Kühlung des Kerns 14 und der Spritzgussform 1 gesteuert. Dabei werden vorteilhafterweise Gas- oder Flüssigkeitskühlungen verwendet.

Aus ästhetischen Gründen können auch verschieden eingefärbte oder transparente Kunststoffe verwendet werden, um spezielle optische Effekte zu erzielen. Dies kann beispielsweise von Vorteil sein, wenn die Sperrschicht 3 im Bereich einer Austrittsöffnung 6 (vgl. Figur 1) so angeordnet ist, dass sie von aussen für den Benutzer sichtbar ist. Die Austrittsöffnung 6 kann dabei auch einen nicht kreisförmigen Querschnitt aufweisen, so dass dem austretende Füllgut ein Muster aufprägbar ist.

## Patentansprüche

1. Verfahren zur Herstellung von mehrschichtigen Tubenschultern (1) aus Kunststoff, **dadurch gekennzeichnet, dass**
a) eine Innenschicht (3) hergestellt wird, indem eine erste Materialkomponente durch einen ersten Angusskanal (25) in eine erste Kavität (22) auf einen Träger (12.1, 12.2) mit einem Freistellelement (14.1, 14.2) gespritzt wird;
b) die Innenschicht (3) aus dieser ersten Kavität (22) gemeinsam mit dem Träger (12.1, 12.2) und dem Freistellelement (14.1, 14.2) entnommen wird;
c) eine Fläche (4) der auf dem Träger (12.1, 12.2) angeordneten Innenschicht (3) einen Hinterschnitt bildend freigestellt wird, indem das Freistellelement (14.1, 14.2) verschoben wird;
d) die Innenschicht (3) mit dem Träger (12.1, 12.2) und dem Freistellelement (14.1, 14.2) in eine zweite Kavität (23) eingebracht wird;
e) in dieser zweiten Kavität (23) die auf dem Träger (12.1, 12.2) angeordnete Innenschicht (3) durch einen zweiten Angusskanal (26) mittels einer zweiten Materialkomponente eine Aussenschicht (2) bildend formschlüssig umspritzt wird.

2. Verfahren zur Herstellung von mehrschichtigen Tubenschultern (1) gemäss Patentanspruch 1, **dadurch gekennzeichnet, dass** die Innenschicht (3) eine Sperrschicht (3) bildet.

3. Verfahren zur Herstellung von mehrschichtigen Tubenschultern (1) gemäss einem der Patentansprüche 1 oder 2, **dadurch gekennzeichnet, dass** beim Spritzen der zweiten Materialkomponente (2) ein Tubenkörper integral mit der Tubenschulter (1) verbunden wird.

4. Werkzeug (10) zur Herstellung von mehrschichtigen Tubenschultern (1) gemäss dem Verfahren nach einem der Patentansprüche 1 bis 3, **gekennzeichnet durch** eine erste Öffnung (20) und eine zweite Öffnung (21) in welchen Öffnungen (20, 21) ein erster und ein zweiter Träger (12.1, 12.2) und ein erstes und ein zweites Freistellelement (14.1, 14.2) angeordnet sind, derart dass eine erste und eine zweite Kavität (22, 23) zur Herstellung einer Innenschicht (3) und einer Aussenschicht (2) einer mehrschichtigen Tubenschulter (1) gebildet werden.

5. Werkzeug (10) zur Herstellung von mehrschichtigen Tubenschultem (1) gemäss Patentanspruch 4, **dadurch gekennzeichnet, dass** das der Träger ein Kem (12.1, 12.2) und das Freistellelement (14.1, 14.2) ringförmig ist.

6. Werkzeug (10) zur Herstellung von mehrschichtigen Tubenschultem (1) gemäss einem der Patentansprüche 4 oder 5, **dadurch gekennzeichnet, dass** der erste und der zweite Kem (12.1, 12.2) gleichzeitig im Einsatz sind.

7. Tubenschulter (1), herstellbar gemäss dem Verfahren nach einem der Patentansprüche 1 bis 3, **dadurch gekennzeichnet, dass** die Kontaktflächen zwischen der Innenschicht (3) und der Aussenschicht (2) eine Gestaltung ohne eine Hinterschneidung aufweist, derart, dass ein zwangsfreies Entformen möglich ist.

8. Tubenschulter (1) gemäss Patentanspruch 7, **dadurch gekennzeichnet, dass** die Innenschicht (3) rotationssymmetrisch ausgestaltet ist.

9. Tubenschulter (1) gemäss Patentanspruch 7 oder 8, **dadurch gekennzeichnet, dass** die Kontaktflächen zwischen der Innenschicht (3) und der Aussenschicht (2) konsequent verjüngend ausgestaltet sind.

10. Tubenschulter (1) gemäss einem der Patentansprüche 7 bis 9, **dadurch gekennzeichnet, dass** die Innenschicht (3) aus Polyethylenterephthalat (PET) und die Aussenschicht (2) aus Polyethylen (PE) besteht.

## Claims

1. Method for the manufacture of multilayer tube shoulders (1) made of plastic, **characterized in that**
a) an inner layer (3) is manufactured by means of injecting a first material component through a first runner (25) into a first cavity (22) onto a support (12.1, 12.2) with a release element (14.1, 14.2);
b) the inner layer (3) is removed from this first cavity (22) together with the support (12.1, 12.2) and the release element (14.1, 14.2);
c) an area (4) of the inner layer (3) arranged on the support (12.1, 12.2) is released forming an undercut by means of shifting the release element (14.1, 14.2);
d) the inner layer (3) with the support 12.2) and the release element (14.1, 14.2) is introduced into a second cavity (23);
e) in this second cavity (23) the inner layer (3) arranged on the support (12.1, 12.2) is surrounded by an outer layer (2) in a positively engaging manner by means of injection of a second material component through a second runner (26).

2. Method for the manufacture of multilayer tube shoulders according to claim 1, **characterized in that** the inner layer (3) is a barrier layer (3).

3. Method for the manufacture of multilayer tube shoulders according to claims 1 or 2, **characterized in that** on injecting the second material component (2) a tube body is integrally connected to the tube shoulder (1).

4. Mould (10) for the facture of multilayer tube shoulders according to the method according to one of claims 1 to 3, **characterized by** a first opening (20) and a second opening (21) in which openings (20, 21) a first and a second support (12.1, 12.2) and a first and a second release element (14.1, 14.2) are arranged, such that a first and a second cavity (22, 23) for manufacture of an inner layer (3) and an outer layer (2) of a multilayer tube shoulder (1) are formed.

5. Mould (10) for manufacture of multilayer tube shoulders (1) according to claim 4, **characterized in that** the support is a core (12.1, 12.2) and the release element (14.1, 14.2) is of annular shape.

6. Mould (10) for manufacture of multilayer tube shoulders (1) according to one of claims 4 or 5, **characterized in that** the first and second core (12.1, 12.2) are applied simultaneously.

7. Tube shoulder (1), manufacturable according to the method according to one of claims 1 to 3, **characterized in that** the contact areas between the inner layer (3) and the outer layer (2) are of a design without undercut, such that a forceless demoulding is possible.

8. Tube shoulder (1) according to claim 7, **characterized in that** the inner layer (3) is designed in a rotation-symmetrical manner.

9. Tube shoulder (1) according to claim 7 or 8, **characterized in that** the contact areas between the inner layer (3) and the outer layer (2) are designed to be consequently diminishing.

10. Tube shoulder (1) according to one of claims 7 to 9, **characterized in that** the inner layer (3) consists of polyethylene terephthalate (PET) and the outer layer (2) consists of polyethylene (PE).

## Revendications

1. Procédé de fabrication d'épaulements de tube (1) à plusieurs couches en matière synthétique, **caractérisé en ce que**
a) on prépare une couche intérieure (3) en injectant un premier composant matériel par un premier canal d'injection (25) dans une première cavité (22), sur un support (12.1, 12.2) présentant un élément de libération (14.1, 14.2) ;
b) la couche intérieure (3) est enlevée de cette première cavité (22) en même temps que le support (12.1, 12.2) et que l'élément de libération (14.1, 14.2) ;
c) une surface (4) de la couche intérieure (3) disposée sur le support (12.1, 12.2) est libérée en formant une contre-dépouille par déplacement de l'élément de libération (14.1, 14.2) ;
d) la couche intérieure (3) est amenée dans une deuxième cavité (23) avec le support (12.1, 12.2) et l'élément de libération (14.1, 14.2) ;
e) la couche intérieure (3) disposée dans cette deuxième cavité (23) sur le support (12.1, 12.2) est revêtue d'un deuxième composant matériel en correspondance géométrique par un deuxième canal d'injection (26), pour former une couche extérieure (2).

2. Procédé de fabrication d'épaulements de tube (1) à plusieurs couches selon la revendication 1, **caractérisé en ce que** la couche intérieure (3) forme une couche de blocage (3).

3. Procédé de fabrication d'épaulements de tube (1) à plusieurs couches selon l'une des revendications 1 ou 2, **caractérisé en ce que** lors de l'injection du deuxième composant matériel (2), un corps de tube est relié d'un seul tenant à l'épaulemen de tube (1).

4. Outil (10) pour la fabrication d'épaulements de tube (1) à plusieurs couches par le procédé selon l'une des revendications 1 à 3, **caractérisé par** une première ouverture (20) et une deuxième ouverture (21), un premier et un deuxième support (12.1, 12.2) et un premier et un deuxième élément de libération (14.1, 14.2) étant disposés dans ces ouvertures (20, 21) de telle sorte qu'une première et une deuxième cavité (22, 23) soient formées en vue de la réalisation d'une couche intérieure (3) et d'une couche extérieure (2) d'une épaulement de tube (1) en plusieurs couches.

5. Outil (10) pour la fabrication d'épaulements de tube (1) à plusieurs couches selon la revendication 4, **caractérisé en ce que** le support est une âme (12.1, 12.2) et l'élément de libération (14.1, 14.2) est de forme annulaire.

6. Outil (10) pour la fabrication d'épaulements de tube (1) à plusieurs couches selon l'une des revendications 4 ou 5, **caractérisé en ce que** la première et la deuxième âme (12.1, 12.2 de) sont utilisées simultanément.

7. Epaulement de tube (1) fabriqué par le procédé selon des revendications 1 à 3, **caractérisé en ce que** les surfaces de contact entre la couche intérieure (3) et la couche extérieure (2) présentent une configuration sans contre-dépouille de manière à pouvoir réaliser un démoulage sans forcer.

8. Epaulement de tube (1) selon la revendication 7, **caractérisé en ce que** la couche intérieure (3) présente une configuration à symétrie de rotation.

9. Epaulement de tube (1) selon les revendications 7 ou 8, **caractérisé en ce que** les surfaces de contact entre la couche intérieure (3) et la couche extérieure (2) sont configurées de manière à se rétrécir en correspondance.

10. Epaulement de tube (1) selon l'une des revendications 7 à 9, **caractérisé en ce que** la couche intérieure (3) est constituée de polyéthylène téréphtalate (PET) et la couche extérieure de polyéthylène (PE).
